Europäisches Patentamt

European Patent Office

Office européen des brevets

(11) Veröffentlichungsnummer: **0 566 876 A2**

## EUROPÄISCHE PATENTANMELDUNG

(21) Anmeldenummer: **93104620.5**

(51) Int. Cl.⁵: **H04Q 3/52**

(22) Anmeldetag: **20.03.93**

(30) Priorität: **21.04.92 DE 4213095**

(43) Veröffentlichungstag der Anmeldung:
**27.10.93 Patentblatt 93/43**

(84) Benannte Vertragsstaaten:
**DE FR GB**

(71) Anmelder: **ROBERT BOSCH GMBH**
**Postfach 30 02 20**
**D-70442 Stuttgart(DE)**

(72) Erfinder: **Bersiner, Lutz, Dr.**
**Werrastrasse 22**
**W-6140 Bensheim(DE)**
Erfinder: **Scherer, Rudolf, Prof. dr.**
**Robert-Götz-Strasse 4**
**W-4600 Dortmund 13(DE)**

(54) **Optisches Schaltnetzwerk.**

(57) Bei einem optischen Schaltnetzwerk zur wahlweisen Verbindung von Eingängen mit Ausgängen, wobei Eingänge mehrerer Matrixanordnungen über ein erstes Permutationsnetzwerk mit Ausgängen von Eingangsschaltern und Ausgänge der Matrixanordnungen über ein zweites Permutationsnetzwerk mit Eingängen von Ausgangsschaltern verbunden sind, weisen die Eingangsschalter jeweils mehrere Eingänge auf, welche die Eingänge des Schaltnetzwerks bilden. Die Ausgangsschalter weisen jeweils mehrere Ausgänge auf, welche die Ausgänge des Schaltnetzwerks bilden.

Fig. 1

Die Erfindung geht aus von einem optischen Schaltnetzwerk nach der Gattung des Hauptanspruchs.

Zur wahlfreien Verbindung von mehreren optischen Sendern mit mehreren optischen Empfängern über Leitungen sind optische Schaltnetzwerke erforderlich, die vorzugsweise als integriert optisches Bauelement realisiert werden. Ein Schaltnetzwerk besteht zum Beispiel aus schaltbaren optischen Richtkopplern, bei denen zwei Lichtleiter von jeweils einem Eingang über einen vorgegebenen Weg dicht beieinander geführt werden und dann auseinanderlaufend mit zwei Ausgängen verbunden sind. Durch Anlegen eines elektrischen Feldes kann bewirkt werden, daß die Lichtwellen entweder von dem jeweiligen Leiter vom Eingang zum Ausgang geführt werden oder daß die Lichtwellen von einem zum anderen Lichtleiter überwechseln, so daß eine kreuzförmige Verbindung entsteht.

Beim Aufbau von Schaltnetzwerken aus derartigen Schaltern ist unter anderem zu berücksichtigen, daß die Anzahl der von dem jeweiligen optischen Signal durchlaufenen Schalter unabhängig vom Durchschalteweg, also für alle Verbindungen konstant sein soll.

Aus Journal of Lightwave Technology, Vol. 7, No. 7, July 1989, Seiten 1023 bis 1028 sind verschiedene optische Schaltnetzwerke bekannt, insbesondere eine Kreuzschienenschaltermatrix und eine Matrix in vereinfachter Baumstruktur (STS). Letztere besteht aus vier Matrixanordnungen, im folgenden Substrukturen genannt, vom Typ N/2xN/2, wobei N Eingänge über eine Eingangsstufe aus N Stück 1x2-Schaltern mit den vier Substrukturen vom Typ N/2xN/2 verbunden werden. Die insgesamt 2N Ausgänge der vier Substrukturen werden über eine Ausgangsstufe aus N Stück 2x1-Schaltern mit N Ausgängen verbunden. Das kleinste STS-Schaltnetzwerk hat eine Größe von 4x4. Größere Schaltnetzwerke vom Typ $2^i x 2^i$ können rekursiv aus solchen vom Typ $2^{i-1} x 2^{i-1}$ gewonnen werden. Die Anzahl der zu durchlaufenden Schaltebenen ist k = 2 ld N - 1.

Fällt bei einem STS-Schaltnetzwerk ein Schalter in der Eingangs- oder Ausgangsstufe aus, ist lediglich der betreffende Eingang bzw. Ausgang betroffen. Der Ausfall eines Schalters in der Mitte des STS-Schaltnetzwerks betrifft dagegen zwei Eingänge und zwei Ausgänge. Durch den Einsatz von redundanten Strukturen wird bei integrierten Schaltkreisen häufig die Verwendbarkeit für den vorgesehenen Zweck - also zur Verbindung der vorgesehenen Anzahl von Ausgängen mit der vorgesehenen Anzahl von Eingängensichergestellt, auch wenn einzelne Teile ausfallen. Bei einem STS-Schaltnetzwerk ist jedoch der Einsatz von Redundanz durch die Beschränkung der Schaltergröße auf Potenzen von 2 eingeschränkt.

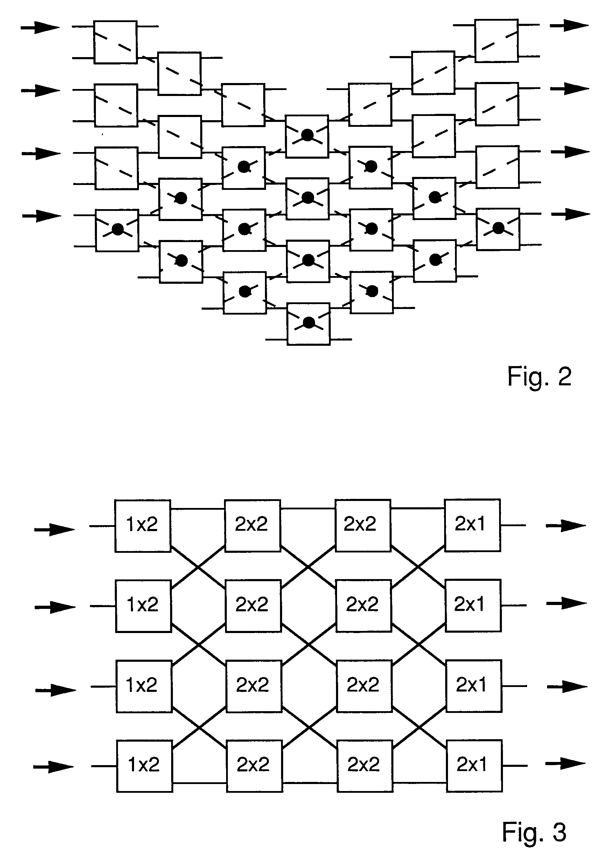

Bei dem ebenfalls bekannten Kreuzschienenschalter ist ohne weitere Maßnahmen die Zahl der durchlaufenen Schalter nicht unabhängig vom Durchschalteweg. Um dieses zu erreichen, können zusätzliche Schalter ohne weitere Funktion eingeführt werden, wie dieses in Fig. 2 dargestellt ist. Dieses auch erweiterte Matrix genannte Schaltnetzwerk kann durch Einführung zusätzlicher Zeilen und Spalten eine Redundanz erhalten. Der Ausfall eines Schalters in den Eingangs- oder Ausgangsstufen oder eines der ansonsten funktionslosen Schalter bleibt wie beim STS-Schaltnetzwerk für alle anderen Eingänge bzw. Ausgänge folgenlos. Der Ausfall eines Schalters im Inneren der Matrix betrifft einen Eingang und einen Ausgang.

Aus IEEE Journal on Selected Areas in Communications 6, Seiten 1117 bis 1130 (1988) ist eine modifizierte Matrixanordnung nach Fig. 3 bekanntgeworden, bei welcher im Innern 2x2-Schalter und als Eingangs- bzw. Ausgangsstufen 1x2- bzw. 2x1-Schalter verwendet werden. Die Anzahl der durchlaufenen Schaltebenen ist unabhängig von dem jeweiligen Durchschalteweg. Bezüglich der Folgen bei Ausfall eines Schalters sowie der Möglichkeiten Redundanz einzuführen, verhält sich die modifizierte Matrix wie die erweiterte Matrix.

Aufgabe der vorliegenden Erfindung ist es, ein optisches Schaltnetzwerk anzugeben, das die genannten positiven Eigenschaften auf sich vereinigt und einen effektiven variablen Einsatz eines einzigen integrierten optischen Bauelementes ermöglicht. Insbesondere soll die Zahl der zu durchlaufenen Schaltebenen unabhängig vom Durchschalteweg sein. Ferner ist eine strenge Blockierungsfreiheit gemeint, das heißt, es sollen alle Eingänge gleichzeitig mit jeweils einem Ausgang verbunden werden können, ohne daß eine Umordnung von zuvor eingestellten Durchschaltewegen erforderlich ist. Außerdem soll eine maßvolle Überdimensionierung des Schaltnetzwerkes zur Erhöhung der Betriebssicherheit und/oder der Chip-Ausbeute möglich sein.

Diese Aufgabe wird bei einem optischen Schaltnetzwerk mit den kennzeichnenden Merkmalen des Hauptanspruchs gelöst. Die Vielfalt der Nutzungsmöglichkeiten kann durch eine entsprechende Steuerung der Eingangsschalter und der Ausgangsschalter sowie durch eine entsprechende Beschaltung der Eingänge und Ausgänge des Schaltnetzwerks erzielt werden. So kann beispielsweise ein erfindungsgemäßes Schaltnetzwerk als ein Schaltnetzwerk vom Typ NxN oder als mehrere voneinander unabhängige kleinere Schaltnetzwerke genutzt werden.

Gemäß einer vorteilhaften Ausführungsform der Erfindung können die Eingangs- und/oder Ausgangsschalter von weiteren Matrixanordnungen vom Typ nxn gebildet sein, wobei n mindestens 2 ist. Eine besonders vorteilhafte Ausführungsform ist dadurch gekennzeichnet, daß die Eingangs- und/oder die Ausgangsschalter von jeweils einem einzigen optischen Kreuzschalter mit zwei Eingängen und zwei Ausgängen gebildet sind, wobei in Abhängigkeit von einem zugeführten Steuersignal ein erster Eingang mit einem ersten Ausgang und ein zweiter Eingang mit einem zweiten Ausgang oder der erste Eingang mit dem zweiten Ausgang und der zweite Eingang mit dem ersten Ausgang (2x2-Schalter) verbunden werden.

Diese Ausführungsform kann als Schaltnetzwerk vom Typ NxN, als zwei unabhängige Schaltnetzwerke vom Typ N/2xN, als zwei unabhängige Schaltnetzwerke vom Typ NxN/2 oder als vier unabhängige Schaltnetzwerke vom Typ N/2xN/2 verwendet werden. Näheres wird im Zusammenhang mit den Ausführungsbeispielen erläutert.

In vorteilhafter Weise wird das Schaltnetzwerk gemäß dieser Ausführungsform dadurch ausgestaltet, daß die Eingangsschalter in zwei Gruppen aufgeteilt sind und daß die Ausgänge der Eingangsschalter jeweils einer Gruppe mit den Eingängen von zwei Matrixanordnungen über das erste Permutationsnetzwerk derart verbunden sind, daß ein Ausgang jedes Eingangsschalters der jeweiligen Gruppe mit einem Eingang der einen Matrixanordnung und ein anderer Ausgang jedes Eingangsschalters der jeweiligen Gruppe mit einem Eingang der anderen Matrixanordnung verbunden ist. Hierbei kann vorgesehen sein, daß ein Eingangs-Permutationsnetzwerk Eingänge des Schaltnetzwerks mit Eingängen der Eingangsschalter derart verbindet, daß eine Gruppe von benachbarten Eingängen des Schaltnetzwerks jeweils einen Eingang derjenigen Eingangsschalter enthält, deren Ausgänge mit derselben der Matrixanordnungen verbunden sind.

Diese Ausgestaltung hat den Vorteil, daß Leitungsbündel aus Glasfasern an benachbart liegende Eingänge angeschlossen werden können, die bei einer Aufteilung des erfindungsgemäßen Schaltnetzwerks in mehrere Schaltnetzwerke zu einem dieser Teil-Schaltnetzwerke gehören. Entsprechende Weiterbildungen sind auch im Zusammenhang mit den Ausgangsschaltern möglich.

Durch die in weiteren Unteransprüchen aufgeführten Maßnahmen sind weitere vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:

Fig. 1    ein erstes Ausführungsbeispiel als NxN-Schaltnetzwerk,

Fig. 2    eine bekannte erweiterte Matrix,

Fig. 3    eine bekannte modifizierte Matrix,

Fig. 4    das Ausführungsbeispiel nach Fig. 1 beim Betrieb als zwei unabhängige Schaltnetzwerke mit jeweils N/2 Eingängen und N Ausgängen,

Fig. 5    das Ausführungsbeispiel nach Fig. 1 beim Betrieb als zwei unabhängige Schaltnetzwerke mit jeweils N Eingängen und N/2 Ausgängen,

Fig. 6    das Ausführungsbeispiel nach Fig. 1 beim Betrieb als vier unabhängige Schaltnetzwerke des Typs N/2xN/2,

Fig. 7    ein zweites Ausführungsbeispiel,

Fig. 8    zwei Varianten eines Permutationsnetzwerks für die Verwendung in den Ausführungsbeispielen nach Fig. 1 bzw. Fig. 7,

Fig. 9    und Fig. 10 zwei Ausführungsbeispiele für größere mit erfindungsgemäßen Schaltnetzwerken aufgebaute Schaltnetzwerke und

Fig. 10    ein drittes Ausführungsbeispiel.

Gleiche Teile sind in den Figuren mit gleichen Bezugszeichen versehen. Die Eingänge der einzelnen Funktionsblöcke befinden sich in den Figuren an der linken, die Ausgänge an der rechten Seite des jeweiligen Funktionsblocks.

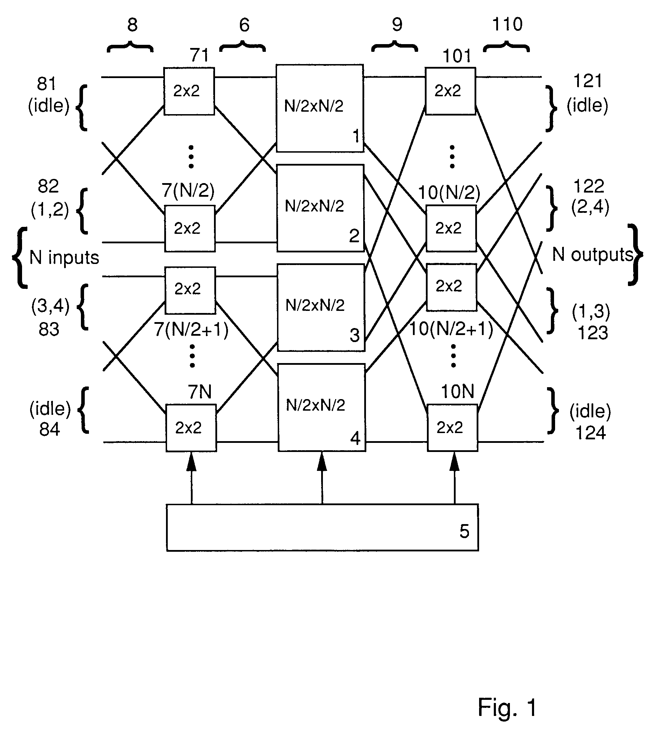

Das Schaltnetzwerk gemäß Fig. 1 enthält vier Matrixanordnungen 1, 2, 3, 4, die im folgenden Substrukturen genannt werden und beispielsweise als erweiterte Matrix gemäß Fig. 2 oder als modifizierte Matrix gemäß Fig. 3 ausgeführt sein können. Jede dieser Substrukturen enthält N/2 Eingänge, die blockierungsfrei mit N/2 Ausgängen verbunden werden können. Geeignete Steuersignale werden in an sich bekannter Weise von einer Steuerschaltung 5 den einzelnen Substrukturen 1 bis 4 zugeführt. Über ein erstes Permutationsnetzwerk 6 sind die Eingänge der Substrukturen 1 bis 4 mit je einem Ausgang von Eingangsschaltern 71 bis 7N verbunden. In Anlehnung an die Bezeichnung für Matrixanordnungen sind die Kreuzschalter in den Figuren mit 2x2 symbolisiert, da auch bei ihnen zwei Eingänge mit zwei Ausgängen verbunden werden können.

Die Eingänge der Eingangsschalter 71 bis 7N stellen an sich auch die Eingänge des Schaltnetzwerks gemäß Fig. 1 dar. Sie sind jedoch über ein weiteres, im folgenden Eingangs-Permutationsnetzwerk genanntes Permutationsnetzwerk 8 umgeordnet, so daß diejenigen Eingänge, über welche jeweils eine Substruktur bei gleicher Stellung der Eingangsschalter 71 erreichbar ist, nebeneinander liegen. Dadurch liegen bei einer Verwendung des erfindungsgemäßen Schaltnetzwerks gemäß Fig. 1 benutzte Eingänge nebeneinander, so daß ein flaches Bündel optischer Wellenleiter zur Zuführung der verschiedenen Signale ohne Auffächerung benutzt werden kann. So bleiben bei dieser Verwendung die Eingänge der Gruppen 81 und 84 ungenutzt, während die in den Gruppen 82, 83 liegenden Eingänge verwendet werden. In Abhängigkeit von Steuersignalen, die den Eingangsschaltern 71 bis 7N von der Steuerschaltung 5 zugeleitet werden, können die Signale von den Eingängen der Gruppe 82 entweder die Substruktur 1 oder die Substruktur 2 und Signale von Eingängen der Gruppe 83 die Substrukturen 3 oder 4 erreichen, was in den Figuren jeweils in Klammern angedeutet ist. Dabei bedeutet (idle), daß die Eingänge bzw. Ausgänge nicht benutzt werden.

Die Ausgänge der Substrukturen 1 bis 4 sind über ein zweites Permutationsnetzwerk 9 mit Ausgangsschaltern 101 bis 10N verbunden. Durch eine andere Permutierung gegenüber dem Permutationsnetzwerk 6 wird erreicht, daß von jedem Eingang jeder Ausgangsschalter 101 bis 10N erreicht werden kann - und damit auch jeder Ausgang des Schaltnetzwerks. Die Ausgänge des Schaltnetzwerks sind über ein weiteres Permutationsnetzwerk 110 in ähnlicher Weise wie die Eingänge in Gruppen 121, 122, 123, 124 eingeteilt. Die Ausgangsschalter 101 bis 10N werden ebenfalls von der Steuerschaltung 5 gesteuert.

Werden bei dem Schaltnetzwerk nach Fig. 1 nur die Ausgänge der Gruppen 122 und 123 benutzt und die Eingangsschalter, die Substrukturen und die Ausgangsschalter entsprechend gesteuert, kann jeder der benutzten Eingänge mit jedem der benutzten Ausgänge verbunden werden, wobei die eingangs genannten Vorteile, nämlich die Unabhängigkeit der Anzahl der durchlaufenen Schalter vom Durchschalteweg und die strenge Blockierungsfreiheit, gewährleistet sind.

N kann ein beliebiges Vielfaches von n sein, wobei n die Größe der Eingangs- bzw. Ausgangsschalter nxn bezeichnet. Dadurch ist eine maßvolle Überdimensionierung des Schaltnetzwerks zur Erhöhung der Betriebssicherheit oder der Chip-Ausbeute möglich. So kann beispielsweise für n = 2, wie bei den Ausführungsbeispielen, ein zur Verwendung als 8x8-Schaltnetzwerk vorgesehenes Bauelement als 10x10-Schaltnetzwerk ausgelegt werden. Selbst bei Ausfall von zwei Schaltern erfüllt dieses Schaltnetzwerk noch die bestimmungsgemäße Funktion.

Wie bereits erwähnt, können die Substrukturen 1 bis 4 als erweiterte Matrix gemäß Fig. 2 oder als modifizierte Matrix gemäß Fig. 3 ausgeführt werden. Da beide Matrixanordnungen an sich bekannt sind, erübrigt sich eine ausführliche Beschreibung. Die erweiterte Matrix nach Fig. 2 besteht aus steuerbaren optischen Kreuzschaltern, die in Fig. 2 durch einen Punkt gekennzeichnet sind. Die übrigen in Fig. 2 dargestellten Kreuzschalter dienen zum Ausgleich von Wegdifferenzen und befinden sich immer in der durch die gestrichelten Linien gekennzeichneten Stellung. Durch Pfeile sind die Zuführung und die Ableitung der optischen Signale für die Eingänge bzw. von den Ausgängen der Matrix angedeutet.

Bei der in Fig. 3 dargestellten modifizierten Matrix des Typs 4x4 sind acht Kreuzschalter (2x2) und als Eingangs- bzw Ausgangsstufen 1x2-Schalter bzw. 2x1-Schalter vorgesehen. Auch bei dieser Matrix ist die Anzahl der durchlaufenen Schaltebenen unabhängig vom Durchschalteweg. Ferner ist ebenfalls eine strenge Blockierungsfreiheit gegeben.

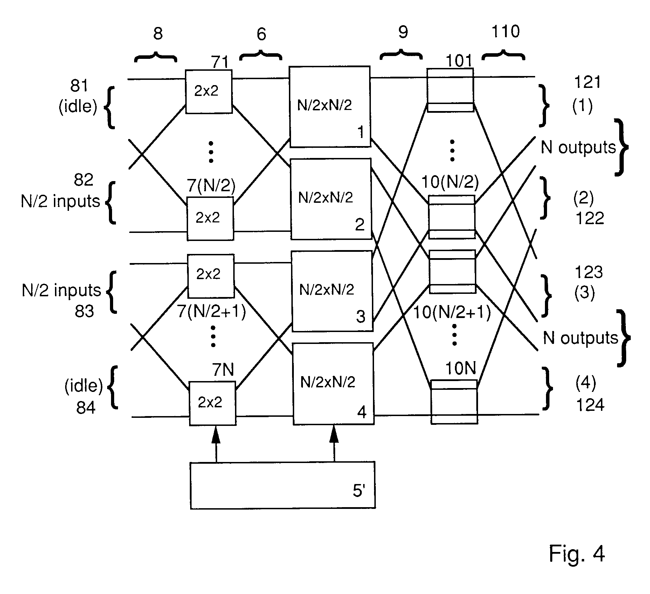

Fig. 4 zeigt das gleiche Schaltnetzwerk wie Fig. 1. Es werden jedoch zum Zwecke des Verbindungsaufbaus nur die Eingangsschalter 71 bis 7N sowie die Substrukturen 1 bis 4 gesteuert, während sich die Ausgangsschalter 101 bis 10N in ihrer Parallelstellung befinden. Dadurch entstehen zwei unabhängige Schaltnetzwerke. Das eine wird von den Eingängen der Gruppe 82, den Eingangsschaltern 71 bis 2(N/2), den Substrukturen 1 und 2, den jeweils oberen Signalwegen des Ausgangsschalter 101 bis 10N und den Ausgängen der Gruppen 121 und 122 gebildet. Das andere Schaltnetzwerk der Größe N/2xN besteht aus den übrigen Teilen. Um anzudeuten, daß betriebsmäßig - also zum Aufbau der jeweils erforderlichen Verbindungen - nur die Eingangsschalter und Substrukturen gesteuert werden, ist in Fig. 4 eine Steuerschaltung 5' dargestellt, welche mit diesen Elementen verbunden ist. Die Ausgangsschalter 101 bis 10N werden von in Fig. 4 dargestellten Mitteln mit konstanten Steuersignalen versorgt.

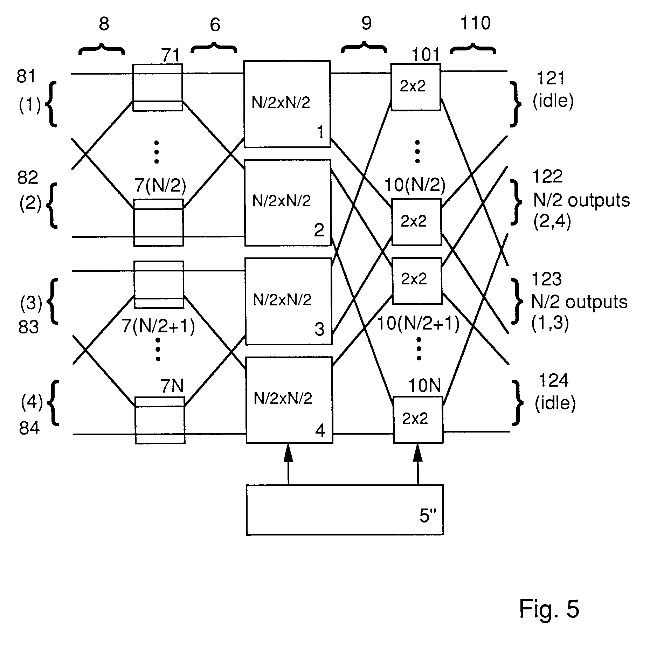

Bei der Anordnung nach Fig. 5 ist die Stellung der Eingangsschalter 71 bis 7N konstant. Dadurch ergeben sich zwei Schaltnetzwerke der Größe NxN/2. Das eine Schaltnetzwerk besteht aus den Eingängen der Gruppen 81 und 83, dem jeweils oberen Signalweg der Eingangsschalter 71 bis 7N, den Substrukturen 1 und 3, den Ausgangsschaltern 101 bis 10(N/2) und den Ausgängen der Gruppe 123. Mit dem anderen Schaltnetzwerk ist es möglich, die Eingänge der Gruppen 82 und 84 mit Ausgängen der Gruppe 132 zu verbinden. Eine Steuerschaltung 5'' versorgt die Substrukturen 1 bis 4 und die Ausgangsschalter 101 bis 10N mit Steuersignalen. Die Eingangsschalter 71 bis 7N werden von in Fig. 5 dargestellten Mitteln mit konstanten Steuersignalen versorgt.

Alternativ kann ein Schaltnetzwerk der Größe NxN/2 durch die Betriebsweise gemäß Fig. 4 bei Umkehr der Richtung der optischen Signale realisiert werden, so daß Eingänge und Ausgänge ihre Rollen vertauschen.

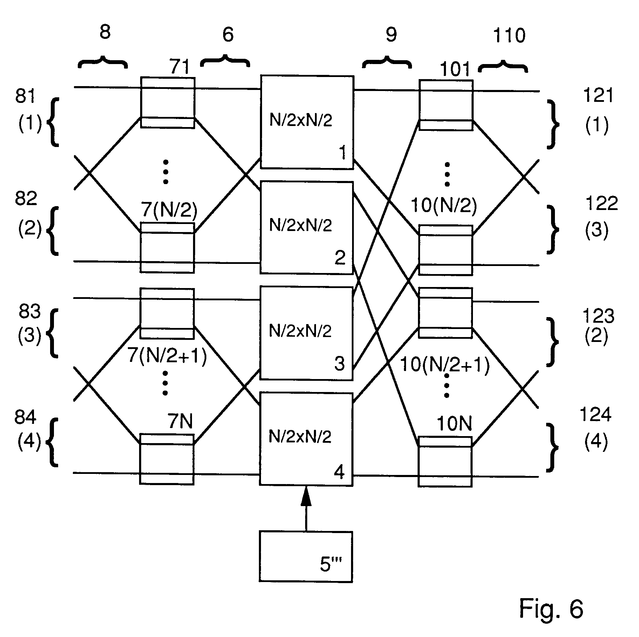

Bei der Anordnung nach Fig. 6 sind sowohl die Stellungen der Eingangsschalter 71 bis 7N als auch die Stellungen der Ausgangsschalter 101 bis 10N konstant. Dadurch werden vier Schaltnetzwerke der Größe N/2xN/2 gebildet. Die Gruppen 81 bis 84 der Eingänge sowie die Gruppen 121 bis 124 der Ausgänge sind jeweils einer der Substrukturen 1 bis 4 festzugeordnet. Eine Steuerschaltung 5''' steuert lediglich die Substrukturen 1 bis 4. Die Eingangsschalter 71 bis 7N und die Ausgangsschalter 101 bis 10N werden von in Fig. 6 dargestellten Mitteln mit konstanten Steuersignalen versorgt.

In der folgenden Tabelle sind die Anzahl k der Schaltstufen, die ein Signal jeweils durchläuft, und die Anzahl S der benötigten Schalter für verschiedene Schaltnetzwerke zusammengefaßt:

|   | STS | EM | MM | AEM | AMM |
|---|---|---|---|---|---|
| k | $2 \operatorname{ld} N - 1$ | $2N - 1$ | $N$ | $N + 1$ | $N/2 + 2$ |
| S | $5N^2/4 - 2N$ | $2N^2 - N$ | $N^2$ | $2N^2$ | $N^2 + 2N$ |

Die Schaltnetzwerke sind wie folgt abgekürzt:

STS: Simplified Tree Structure, vereinfachte Baumstruktur,

EM: Extended Matrix, erweiterte Matrix,

MM: Modified Matrix, modifizierte Matrix,

AEM: Assembled Extended Matrix, erfindungsgemäßes Schaltnetzwerk mit erweiterter Matrix als Substruktur,

AMM: Assembled Modified Matrix, erfindungsgemäßes Schaltnetzwerk mit modifizierter Matrix als Substruktur.

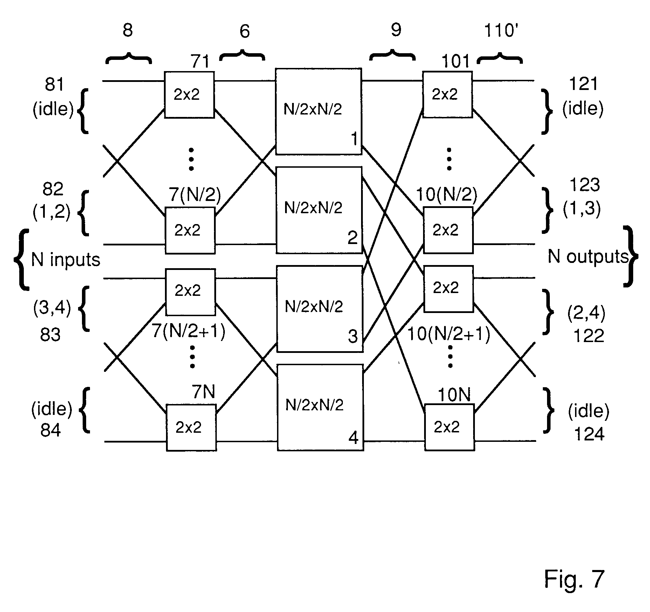

Fig. 7 zeigt ein Ausführungsbeispiel, bei welchem das AuSgangs-Permutationsnetzwerk 110' gegenüber demjenigen beim Ausführungsbeispiel nach Fig. 1 abgewandelt ist. Dadurch ergeben sich weniger Kreuzungspunkte und kürzere Leitungen. Die Gruppen 122 und 123 der Ausgänge sind örtlich miteinander vertauscht.

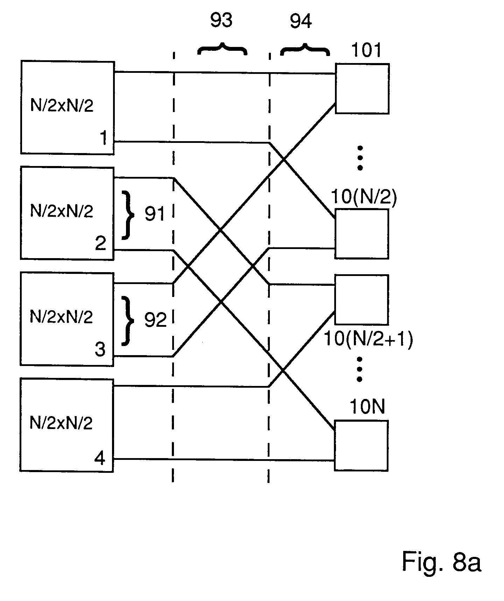

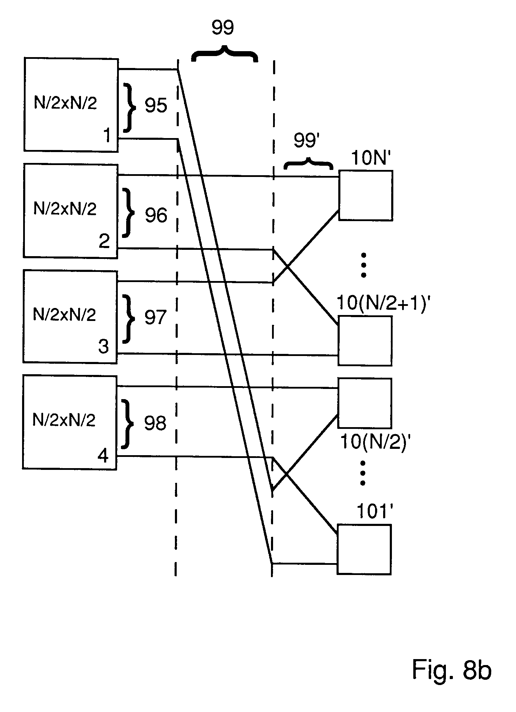

Die Figuren 8a und 8b zeigen Möglichkeiten der Ausführung des zweiten Permutationsnetzwerks 9 (Fig. 1) zwischen den Substrukturen und den Ausgangsschaltern. Bei dem Permutationsnetzwerk nach Fig. 8a wird das aus der Substruktur 2 austretende Leitungsbündel 91 mit dem Leitungsbündel 92 aus der Substruktur 3 im Bereich 93 gekreuzt. Dadurch besteht das anschließende Permutationsnetzwerk 94 aus zwei identischen Hälften mit einfacherem Aufbau.

Bild 8b zeigt eine äquivalente Abwandlung des Permutationsnetzwerks zwischen den Substrukturen 1 bis 4 und den Ausgangssschaltern 101 bis 10N. Das obere Viertel der Ausgangsschalter (in Fig. 8b durch lediglich einen Ausgangsschalter 101' dargestellt) ist an den unteren Teil versetzt. Das aus Substruktur 1 austretende Leitungsbündel 95 wird mit den übrigen Leitungsbündeln 96, 97, 98 im Bereich 99 gekreuzt und an das nach unten versetzte Viertel der Ausgangsschalter herangeführt. Dadurch ergibt sich wiederum ein vereinfachtes Permutationsnetzwerk 99' aus zwei identischen Hälften.

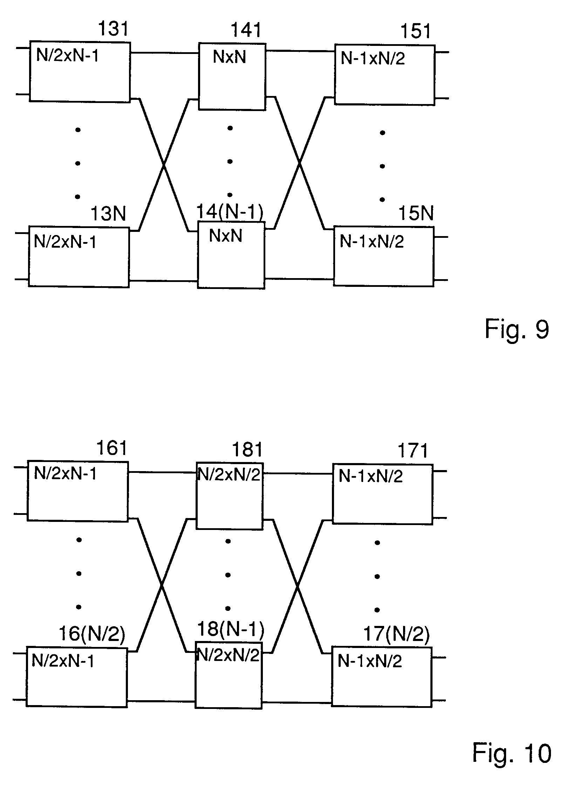

Größere Schaltnetzwerke können in besonders vorteilhafter Weise aus mehreren erfindungsgemäßen Schaltnetzwerken zusammengesetzt werden, wobei je nach Bedarf die einzelnen Schaltnetzwerke entsprechend den Figuren 1, 4, 5 oder 6 betrieben werden können. Dieses wird im folgenden anhand zweier in den Figuren 9 und 10 dargestellter Clos-Schaltnetzwerke erläutert. Clos-Schaltnetzwerke zeichnen sich dadurch aus, daß eine Blockierungsfreiheit ohne Umordnung bestehender Verbindungen gegeben ist.

Bild 9 zeigt ein Clos-Schaltnetzwerk der Größe $N^2/2 \times N^2/2$. Von den N Eingangsstufen 131 bis 13N sind wie in den übrigen Figuren nur die erste und die letzte Eingangsstufe gezeichnet. Insgesamt weisen die Eingangsstufen $N^2/2$ Eingänge auf. Jeweils zwei der als Eingangsstufen dienenden Schaltnetzwerke 131 bis 13N werden von einem gemäß Fig. 4 betriebenen erfindungsgemäßen Schaltnetzwerk gebildet. Die Schaltnetzwerke 141 bis 14(N-1) in der mittleren Schaltebenen werden von je einem erfindungsgemäßen Schaltnetzwerk gebildet, das gemäß Fig. 1 betrieben wird.

Die Ausgangsebene besteht aus N Schaltnetzwerken 151 bis 15N. Diese werden jeweils zu zweit aus erfindungsgemäßen Schaltnetzwerken gebildet, die gemäß Fig. 5 betrieben werden. Bei den Schaltnetzwerken 131 bis 13N bleibt jeweils ein Ausgang frei, während bei den Schaltnetzwerken 151 bis 15N jeweils ein Eingang nicht belegt ist. Das in Fig. 9 gezeigte Clos-Schaltnetzwerk kann somit von 2N-1 gleichen Bauelementen (Chips) gebildet werden.

Fig. 10 zeigt ein kleineres Schaltnetzwerk vom Clos-Typ mit der Größe $N^2/4 \times N^2/4$. Während die Schaltnetzwerke 161 bis 16(N/2) in der Eingangsebene und die Schaltnetzwerke 171 bis 17(N/2) wie bei dem Schaltnetzwerk nach Fig. 9, jedoch mit der halben Anzahl von Bauelementen gebildet werden, besteht die mittlere Schaltebene aus Schaltnetzwerken 181 bis 18(N-1) vom Typ N/2 x N/2, davon werden jeweils vier aus einem erfindungsgemäßen Schaltnetzwerk gebildet, die gemäß Fig. 6 betrieben werden. Insgesamt werden für das Schaltnetzwerk gemäß Fig. 10 3N/4 Chips benötigt.

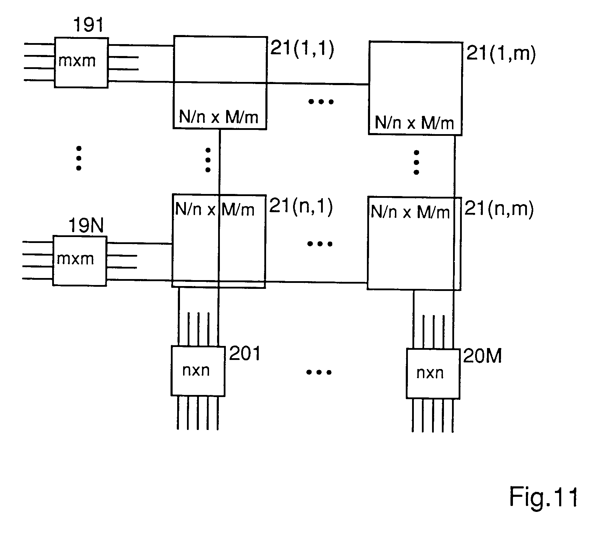

Bei dem Ausführungsbeispiel nach Fig. 11 sind die Eingangsschalter und die Ausgangsschalter jeweils als eine Eingangsmatrix 191 bis 19N der Größe mxn bzw. jeweils als eine Ausgangsmatrix 201 bis 20M der Größe nxn ausgebildet. Diese sind durch m•n Matrixanordnungen der Größe N/nxM/m verbunden, die in Fig. 11 mit 21(1,1) bis 21(n,m) bezeichnet sind. M, m, N und n können an sich beliebig sein, M und N müssen jedoch durch m bzw. n teilbar sein. Bei m = 2, n = 2 und M = N ergibt sich ein dem in Fig. 1 dargestellten Schaltnetzwerk äquivalentes Schaltnetzwerk.

**Patentansprüche**

1. Optisches Schaltnetzwerk zur wahlweisen Verbindung von Eingängen mit Ausgängen, wobei Eingänge mehrerer Matrixanordnungen (1, 2, 3, 4) über ein erstes Permutationsnetzwerk (6) mit Ausgängen von Eingangsschaltern (71 bis 7N) und Ausgänge der Matrixanordnungen (1, 2, 3, 4) über ein zweites Permutationsnetzwerk (9) mit Eingängen von Ausgangsschaltern (101 bis 10N) verbunden sind, dadurch gekennzeichnet, daß die Eingangsschalter (71 bis 7N) jeweils mehrere Eingänge aufweisen, welche die Eingänge des Schaltnetzwerks bilden, und daß die Ausgangsschalter (101 bis 10N) jeweils mehrere Ausgänge aufweisen, welche die Ausgänge des Schaltnetzwerks bilden.

2. Optisches Schaltnetzwerk nach Anspruch 1, dadurch gekennzeichnet, daß die Eingangs- und/oder Ausgangsschalter von weiteren Matrixanordnungen gebildet sind.

3. Optisches Schaltnetzwerk nach Anspruch 2, dadurch gekennzeichnet, daß eine Anzahl N Eingangsschalter (191 bis 19N) der Größe mxn, eine Anzahl M Ausgangsschalter (201 bis 20M) der Größe nxn und eine Anzahl m•n Matrixanordnungen (21(1,1); 21(n,m)) der Größe N/nxM/m vorgesehen sind.

4. Optisches Schaltnetzwerk nach Anspruch 2, dadurch gekennzeichnet, daß die weiteren Matrixanordnungen vom Typ nxn sind, wobei n mindestens 2 ist.

5. Optisches Schaltnetzwerk nach Anspruch 1, dadurch gekennzeichnet, daß die Eingangs- und/oder die Ausgangsschalter von jeweils einem optischen Kreuzschalter (71 bis 7N, 101 bis 10N) mit zwei Eingängen und zwei Ausgängen gebildet sind, wobei in Abhängigkeit von einem zugeführten Steuersignal ein erster Eingang mit einem ersten Ausgang und ein zweiter Eingang mit einem zweiten Ausgang oder der erste Eingang mit dem zweiten Ausgang und der zweite Eingang mit dem ersten Ausgang verbunden werden.

6. Optisches Schaltnetzwerk nach Anspruch 5, dadurch gekennzeichnet, daß die Eingangsschalter (71 bis 7N) in zwei Gruppen (71 bis 7(N/2); 7(N/2 + 1) bis 7N) aufgeteilt sind und daß die Ausgänge der Eingangsschalter jeweils einer Gruppe mit den Eingängen von zwei Matrixanordnungen (1, 2; 3, 4) über das erste Permutationsnetzwerk (6) derart verbunden sind, daß ein Ausgang jedes Eingangsschalters der jeweiligen Gruppe mit einem Eingang der einen Matrixanordnung (1; 3) und ein anderer Ausgang jedes Eingangsschalters der jeweiligen Gruppe mit einem Eingang der anderen Matrixanordnung (2; 4) verbunden ist.

7. Optisches Schaltnetzwerk nach Anspruch 6, dadurch gekennzeichnet, daß ein Eingangs-Permutationsnetzwerk (8) Eingänge des Schaltnetzwerks mit Eingängen der Eingangsschalter (71 bis 7N) derart verbindet, daß eine Gruppe (81; 82; 83; 84) von benachbarten Eingängen des Schaltnetzwerks jeweils einen Eingang derjenigen Eingangsschalter enthält, deren Ausgänge mit einer der Matrixanordnungen (1; 2; 3; 4) verbunden sind.

8. Optisches Schaltnetzwerk nach Anspruch 6, dadurch gekennzeichnet, daß die Ausgangsschalter in zwei Gruppen (101 bis 10(N/2); 10(N/2 + 1) bis 10N) aufgeteilt sind und daß die Eingänge der Ausgangsschalter jeweils einer Gruppe mit Ausgängen von zwei Matrixanordnungen (1, 3; 2, 4) über das zweite Permutationsnetzwerk (9) derart verbunden sind, daß ein Eingang jedes Ausgangsschalters der jeweiligen Gruppe mit einem Ausgang einer Matrixanordnung und ein anderer Eingang jedes Ausgangsschalters der jeweiligen Gruppe mit einem Ausgang der anderen Matrixanordnung verbunden ist, wobei diejenigen Matrixanordnungen (1, 2; 3, 4), die eingangsseitig mit einer Gruppe (71 bis 7(N/2); 7(N/2 + 1) bis 7N) von Eingangsschaltern verbunden sind, ausgangsseitig auf zwei Gruppen (101 bis 10N) von Ausgangsschaltern verteilt sind.

**9.** Optisches Schaltnetzwerk nach Anspruch 8, dadurch gekennzeichnet, daß ein Ausgangs-Permutationsnetzwerk (110) Ausgänge des Schaltnetzwerks mit Ausgängen der Ausgangsschalter (101 bis 10N) derart verbindet, daß eine Gruppe (121; 122; 123; 124) von benachbarten Ausgängen des Schaltnetzwerks jeweils einen Ausgang derjenigen Ausgangsschalter enthält, deren Eingänge mit einer der Matrixanordnungen (1; 2; 3; 4) verbunden sind.

**10.** Optisches Schaltnetzwerk nach Anspruch 5, dadurch gekennzeichnet, daß eine Anzahl N Eingangsschalter (71 bis 7N), N Ausgangsschalter (101 bis 10N) und vier Matrixanordnungen (1; 2; 3; 4) der Größe N/2xN/2 vorgesehen sind.

Fig. 1

Fig. 2

Fig. 3

Fig. 4

Fig. 5

Fig. 6

Fig. 7

Fig. 8a

Fig. 8b

131 141 151
N/2xN-1 | NxN | N-1xN/2

13N 14(N-1) 15N
N/2xN-1 | NxN | N-1xN/2

Fig. 9

161 181 171
N/2xN-1 | N/2xN/2 | N-1xN/2

16(N/2) 18(N-1) 17(N/2)
N/2xN-1 | N/2xN/2 | N-1xN/2

Fig. 10

Fig.11